# EUROPEAN PATENT APPLICATION

(11) **EP 4 545 504 A1**
(43) Date of publication of application: **30.04.2025**
(21) Application number: 23827440.1
(22) Date of filing: 15.06.2023
(51) Int. Cl.: C04B 35/584, C04B 35/64, C04B 35/626, C04B 35/638, C04B 37/00

(54) **METHOD FOR CONTROLLING THERMAL CONDUCTIVITY AND FLEXURAL STRENGTH OF SILICON NITRIDE SUBSTRATE**

(30) Priority: 22.06.2022 KR 20220075950
(71) Applicant: OCI Company Ltd., Seoul 04532 (KR)
(72) Inventor: EO, Kyung Bok, Seongnam-si, Gyeonggi-do 13212 (KR); KIM, Tae Hong, Seongnam-si, Gyeonggi-do 13212 (KR); LEE, Seung Yeon, Seongnam-si, Gyeonggi-do 13212 (KR); CHI, Eun Ok, Seongnam-si, Gyeonggi-do 13212 (KR)
(74) Representative: Zacco Sweden AB
(86) International application number: PCT/KR2023/008245
(87) International publication number: WO 2023/249321

(57) **Abstract**

The present invention relates to a method for controlling physical properties of a silicon nitride substrate, and more specifically, the method comprises the steps of: producing a silicon nitride substrate; and adjusting a residual magnesium content in the silicon nitride substrate. The thermal conductivity of the silicon nitride substrate is inversely proportional to the residual magnesium content in the silicon nitride substrate, and the flexural strength of the silicon nitride substrate is proportional to the residual magnesium content in the silicon nitride substrate.

## Description

### [Technical Field]

The present invention relates to a method for controlling properties of a silicon nitride substrate and, more particularly, to a method for controlling thermal conductivity and flexural strength of a silicon nitride substrate.

### [Background Art]

Due to high electrical insulation and high thermal conductivity, ceramic materials are suitable for use as a heat transfer medium to rapidly dissipate heat generated by a device. Applications of these ceramic materials include device substrates for transfer machines, substrates for highly integrated electronic circuits, heat dissipation components of laser oscillators, reaction vessel components of semiconductor manufacturing equipment, and precision mechanical components.

In particular, ceramic substrates used in high-output power devices require high electrical insulation, high withstand voltage, high thermal conductivity, high mechanical strength, and low dielectric constant. Ceramic substrates that meet these requirements include aluminum nitride substrates, alumina substrates, and silicon nitride substrates, and the like.

Silicon nitride (Si₃N₄) substrates have exceptional properties such as high strength (500 MPa to 800 MPa), high toughness (5 MPa·m to 8 MPa·m), and good coefficient of thermal expansion (CTE) matching to silicon (Si). Furthermore, silicon nitride (Si₃N₄) substrates have high thermal conductivity (70 W/mK to 170 W/mK). These characteristics make silicon nitride (Si₃N₄) substrates suitable for next-generation materials for high-output power devices.

### [Disclosure]

### [Technical Problem]

It is one aspect of the present invention to provide a method for controlling thermal conductivity of a silicon nitride substrate.

It is another aspect of the present invention to provide a method for controlling flexural strength of a silicon nitride substrate.

### [Technical Solution]

In accordance with one aspect of the present invention, a method for controlling thermal conductivity of a silicon nitride substrate includes the steps of: manufacturing a silicon nitride substrate; and adjusting a residual magnesium content in the silicon nitride substrate. The step of manufacturing a silicon nitride substrate includes: preparing a slurry by mixing a silicon nitride powder, a ceramic additive containing magnesium oxide, and a solvent; forming a sheet by molding the slurry; forming a stack structure by sandwiching at least one sheet between a lower plate and an upper plate; subjecting the stack structure to a degreasing process; and subjecting the stack structure to a sintering process, and thermal conductivity of the silicon nitride substrate is inversely proportional to the residual magnesium content in the silicon nitride substrate.

In accordance with another aspect of the present invention, a method for controlling flexural strength of a silicon nitride substrate includes the steps of: preparing a silicon nitride substrate; and adjusting a residual magnesium content in the silicon nitride substrate. The step of manufacturing a silicon nitride substrate includes: preparing a slurry by mixing a silicon nitride powder, a ceramic additive containing magnesium oxide, and a solvent; forming a sheet by molding the slurry; forming a stack structure by sandwiching at least one sheet between a lower plate and an upper plate; subjecting the stack structure to a degreasing process; and subjecting the stack structure to a sintering process, and flexural strength of the silicon nitride substrate is proportional to the residual magnesium content in the silicon nitride substrate.

### [Advantageous Effects]

The present invention establishes that the residual magnesium content is a primary factor determining properties (thermal conductivity and flexural strength) of a final silicon nitride substrate. The present invention provides various methods to adjust the final residual magnesium content in a simple manner during the manufacturing process of a silicon nitride substrate. Consequently, according to the present invention, the properties (thermal conductivity and flexural strength) of the silicon nitride substrate can be easily adjusted to desired levels.

### [Description of Drawings]

FIG. 1 is a flowchart illustrating a method for controlling thermal conductivity and/or flexural strength of a silicon nitride substrate according to embodiments of the present invention.
FIG. 2 is a flowchart illustrating a method for manufacturing a silicon nitride substrate according to embodiments of the present invention.
FIG. 3 is a schematic view illustrating a first step of FIG. 2.
FIG. 4a to FIG. 4c are schematic views illustrating a second step of FIG. 2.
FIG. 5 is a schematic view illustrating a third step of FIG. 2.
FIG. 6 is a schematic view illustrating a fourth step of FIG. 2.
FIG. 7 is a schematic view illustrating a fifth step of FIG. 2.
FIG. 8 is a schematic view illustrating a sixth step of FIG. 2.
FIG. 9 is a schematic view illustrating a seventh step of FIG. 2.
FIG. 10 is a flowchart illustrating a method for adjusting the residual magnesium content in a silicon nitride substrate according to embodiments of the present invention.

### [Best Mode]

Hereinafter, exemplary embodiments of the present invention will be described with reference to the accompanying drawings to provide full understanding of the features and benefits of the invention. However, it should be understood that the present invention is not limited to the embodiments described herein and may be implemented in various forms and subjected to various modifications. The following embodiments are provided for complete disclosure and thorough understanding of the present invention by a person having ordinary knowledge in the art.

It will be understood that, although the terms "first", "second", "A", "B", etc. may be used herein to describe various elements, components, regions, layers and/or sections, these elements, components, regions, layers and/or sections should not be limited by these terms. These terms are only used to distinguish one element, component, region, layer or section from another element, component, region, layer or section. The embodiments described and illustrated herein include complementary embodiments thereof.

The terminology is used herein for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising" when used in this specification, specify the presence of stated features, steps, operations, elements, and/or components, but do not preclude the presence or addition of one or more other features, steps, operations, elements, components, and/or groups.

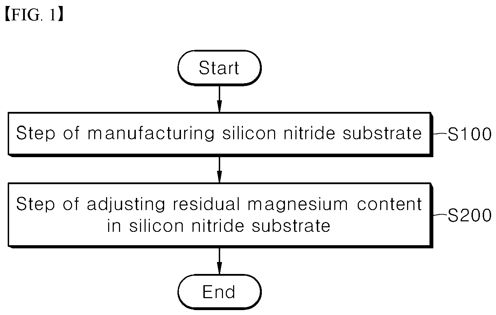

FIG. 1 is a flowchart illustrating a method for controlling thermal conductivity and/or flexural strength of a silicon nitride substrate according to embodiments of the present invention.

Referring to FIG. 1, the method for controlling thermal conductivity and/or flexural strength of a silicon nitride substrate according to the present invention may include the steps of: manufacturing a silicon nitride substrate (S100); and adjusting a residual magnesium content in the silicon nitride substrate (S200).

In one embodiment, the concentration of magnesium (Mg) in the silicon nitride substrate may be inversely proportional to thermal conductivity of the silicon nitride substrate. In other words, thermal conductivity of the silicon nitride substrate decreases with increasing concentration of magnesium (Mg) in the silicon nitride substrate. In one embodiment, the concentration of magnesium (Mg) in the silicon nitride substrate may be proportional to flexural strength of the silicon nitride substrate. In other words, flexural strength of the silicon nitride substrate increases with increasing concentration of magnesium (Mg) in the silicon nitride substrate.

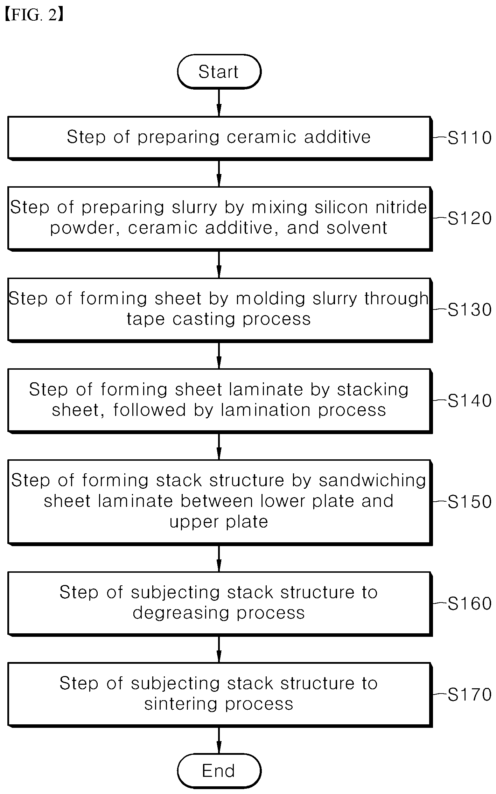

In conclusion, according to the present invention, the thermal conductivity and/or flexural strength of the silicon nitride substrate can be controlled by adjusting the residual magnesium (Mg) content in the silicon nitride substrate. Now, the step of manufacturing a silicon nitride substrate (S110) will be described in more detail with reference to FIG. 2 to FIG. 9.

FIG. 2 is a flowchart illustrating a method for manufacturing a silicon nitride substrate according to embodiments of the present invention. Referring to FIG. 2, the method for manufacturing the silicon nitride substrate according to the present invention includes: the first step (S110) in which a ceramic additive is prepared; the second step (S120) in which a slurry is prepared by mixing a silicon nitride powder, the ceramic additive, and a solvent; the third step (S130) in which a sheet is formed by molding the slurry through a tape casting process; the fourth step (S140) in which a sheet laminate is formed by stacking a plurality of sheets formed in the third step, followed by a lamination process; the fifth step (S150) in which a stack structure is formed by sandwiching the sheet laminate SSH between a lower plate and an upper plate; the sixth step (S160) in which the stack structure is subjected to a degreasing process; and the seventh step (S170) in which the stack structure is subjected to a sintering process.

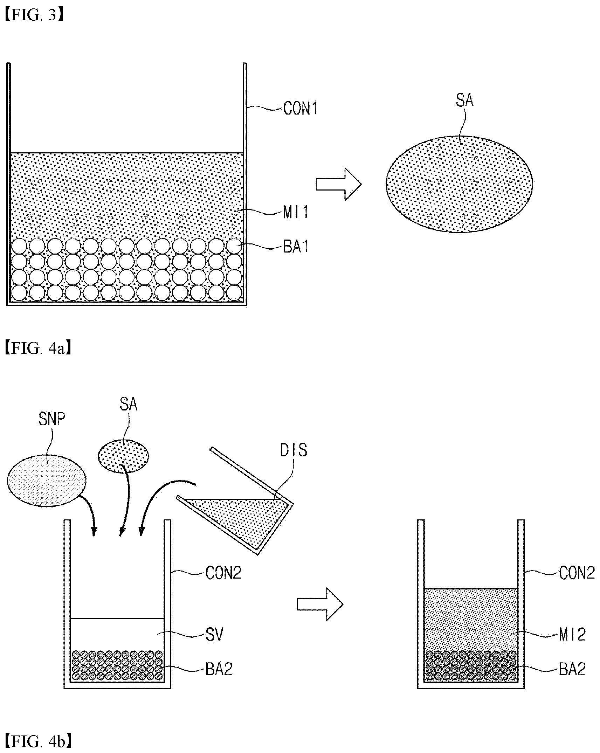

FIG. 3 is a schematic view illustrating the first step of FIG. 2.

Referring to FIG. 2 and FIG. 3, first balls BA1 and a first mixture MI1 may be placed in a first container CON1. The first mixture MI1 may include a ceramic powder and a solvent. Specifically, the first balls BA1 and the solvent may be placed in the first container CON1. The ceramic powder may be placed in the solvent. The first balls BA1 may include a ceramic material, such as zirconia. The solvent is an organic solvent and may include, for example, ethanol. The ceramic powder may include yttrium oxide (Y₂O₃) and magnesium oxide (MgO).

The first mixture MI1 may be stirred using a mixing device such that the ceramic powder is homogeneously dispersed within the first mixture MI1. The first balls BA1 may physically assist in homogeneous dispersion of the ceramic powder. Specifically, yttrium oxide powder and magnesium oxide powder may be homogeneously dispersed within the first mixture MI1.

After completion of the mixing process, the first balls BA1 may be removed. The first mixture MI1 may be dried to completely evaporate the solvent. As a result, a ceramic additive SA in powder form may be obtained (S110). The ceramic additive SA may include yttrium oxide (Y₂O₃) and magnesium oxide (MgO).

In one embodiment, the ceramic additive SA may consist of only yttrium oxide (Y₂O₃) and magnesium oxide (MgO). In another embodiment, the ceramic additive SA may further include an additional oxide (for example, zirconium oxide) in addition to yttrium oxide (Y₂O₃) and magnesium oxide (MgO).

A mass ratio of the yttrium oxide (Y₂O₃) to the ceramic additive SA may range from 0.3 to 0.5. A mass ratio of the magnesium oxide (MgO) to the ceramic additive SA may range from 0.5 to 0.7. An atomic ratio of magnesium (Mg) to yttrium (Y) in the ceramic additive SA may range from 1 to 5. More specifically, the atomic ratio of magnesium (Mg) to yttrium (Y) in the ceramic additive SA may range from 2 to 5. In other words, the number of magnesium atoms in the ceramic additive SA may be 1 to 5 times, more specifically 2 to 5 times, the number of yttrium atoms in the ceramic additive SA.

FIG. 4a to FIG. 4c are schematic views illustrating the second step of FIG. 2.

Referring to FIG. 2 and FIG. 4a, a solvent SV and second balls BA2 may be placed in a second container CON2. The solvent SV is an organic solvent and may include, for example, isopropyl alcohol and toluene. Here, isopropyl alcohol and toluene may be mixed in a volume ratio of 4:6. The second balls BA2 may include silicon nitride.

A second mixture MI2 may be prepared by adding silicon nitride (Si₃N₄) powder SNP, a ceramic additive SA, and a dispersant DIS to the solvent SV in the second container CON2. Here, the ceramic additive SA may be the ceramic additive prepared in the first step (S110). The dispersant DIS may include a commercially available dispersant DIS, for example, BYK-111.

The solvent SV may be present in an amount of 40 vol% to 60 vol% based on the total volume of the second mixture MI2. The silicon nitride powder SNP may be present in an amount of 15 vol% to 25 vol% based on the total volume of the second mixture MI2. The ceramic additive SA may be present in an amount of 5 wt% to 10 wt% based on the total weight of the second mixture MI2. More specifically, the ceramic additive SA may be present in an amount of 5 wt% to 7 wt% based on the total weight of the second mixture MI2.

If the content of the ceramic additive SA in the second mixture MI2 exceeds 10 wt%, the properties (for example, thermal conductivity) of a resulting silicon nitride substrate can be significantly degraded. Moreover, purity of the silicon nitride substrate can be reduced. Accordingly, the content of the ceramic additive SA in the second mixture MI2 may be strictly limited to 5 wt% to 10 wt%, preferably 5 wt% to 7 wt%.

The second mixture MI2 may be subjected to a first ball milling process to homogenize the second mixture MI2. The second balls may physically assist in homogenization of the second mixture MI2.

Specifically, the first ball milling process may include rotating the second container containing the second mixture MI2 at a constant speed using a ball milling machine. As the second container is rotated, the second mixture is mechanically pulverized and homogenized by the second balls in the second container. Here, the rotational speed of the ball milling machine may range from 100 rpm to 500 rpm.

Referring to FIG. 2 and FIG. 4b, after the first ball milling process, a third mixture MI3 may be prepared by adding a binder BI and a plasticizer PL to the second mixture MI2. The binder BI may include at least one selected from among a cellulose derivative, such as ethyl cellulose, methyl cellulose, nitrocellulose, and carboxy cellulose (carboxymethyl cellulose?), a resin, such as polyvinyl alcohol, acrylic acid ester, methacrylic acid ester, and polyvinyl butyral, and a mixture of the cellulose derivative and the resin. For example, the binder BI may include polyvinyl butyral (PVB). The plasticizer PL may include dibutyl phthalate or dioctyl phthalate. The mass of the plasticizer PL added to the second mixture may be about 50% the mass of the binder BI added to the second mixture. Additionally, a solvent may be further added to the second mixture MI2.

The third mixture MI3 may be subjected to a second ball milling process to homogenize the third mixture MI3. A slurry SL may be prepared by homogenizing the third mixture MI3 through the second ball milling process (S120). The second ball milling process may be substantially the same as or similar to the first ball milling process described above. After the second ball milling process, the second balls may be removed.

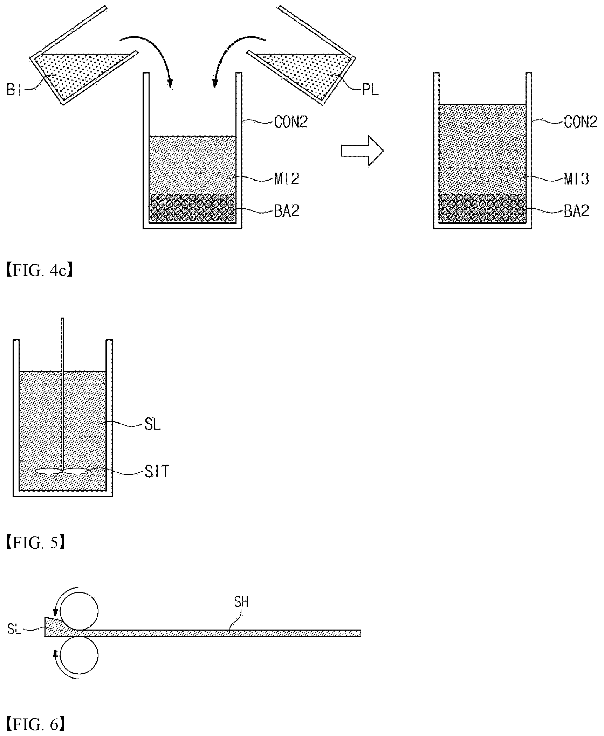

Referring to FIG. 2 and FIG. 4c, the slurry SL prepared through the second ball milling process may be subjected to aging to remove volatile gases from the slurry SL. During aging of the slurry SL, the slurry SL may be agitated using a stirrer SIT. Aging of the slurry may be performed for about 24 hours.

FIG. 5 is a schematic view illustrating the third step of FIG. 2.

Referring to FIG. 2 and FIG. 5, a sheet SH may be formed by molding the slurry SL prepared in the second step (S120) through a tape casting process (S130). Specifically, the tape casting process may include pouring the slurry SL onto a doctor blade having a predetermined dam height, followed by application of the slurry SL to a moving substrate film. Then, the solvent may be volatilized from the slurry SL applied to the substrate film, followed by removal of the substrate film to obtain a molded product SH in sheet form. The substrate film may include a stainless steel tape, an oil paper tape, or a polymer tape such as polyester tape. For example, the slurry SL may be poured onto a doctor blade having a dam height of about 0.3 mm, followed by application of the slurry SL to a substrate film moving at a predetermined speed (for example, 0.1 m/min to 1 m/min). Thereafter, a sheet SH may be obtained by performing a drying process and a process of removing the substrate film.

The tape casting process may be performed at 30°C to 80°C. The sheet SH formed through the tape casting process may be cut to a suitable size. The sheet SH may have a thickness of 0.1 mm to 0.16 mm.

The sheet SH may have a size of M×N. Here, each of M and N may range from 60 mm to 300 mm, without being limited thereto. That is, each of M and N may be varied depending on the intended size of a final substrate.

FIG. 6 is a schematic view illustrating the fourth step of FIG. 2.

Referring to FIG. 2 and FIG. 6, a plurality of sheets SH prepared in the third step (S130) may be stacked one above another. A sheet laminate SSH may be formed by subjecting the stacked sheets SH to a lamination process (S140). For example, three to five sheets SH may be laminated to form a sheet laminate SSH. The lamination process may be performed at a pressure of about 10 MPa and a temperature of about 60°C.

The sheet laminate SSH may be pressed. The pressing process may be performed using a warm isostatic press (WIP). The pressing process may be performed at a pressure of about 30 MPa and a temperature of about 70°C. The sheet laminate SSH may have a final thickness of 0.3 mm to 4 mm.

Since the sheet laminate SSH is a stack of a plurality of sheets SH, the sheet laminate SSH may have substantially the same size as each sheet SH. In other words, the sheet laminate SSH may have a size of M×N. Here, each of M and N may range from 60 mm to 300 mm.

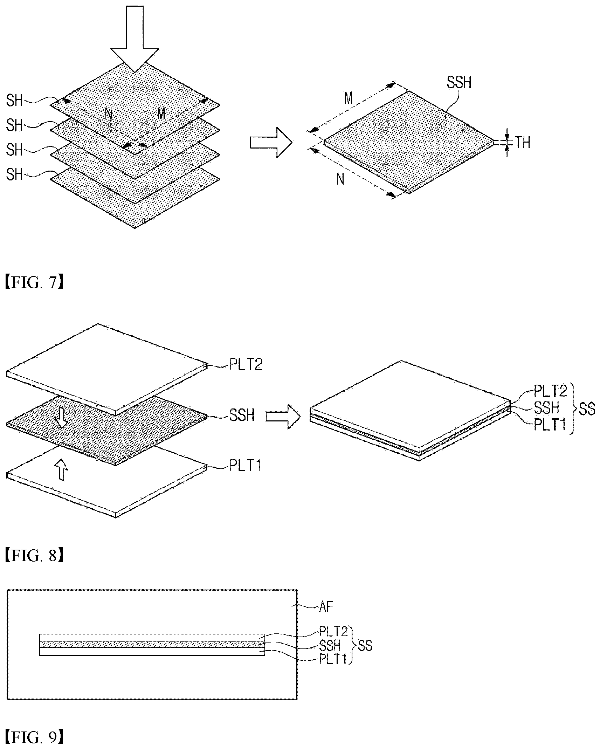

FIG. 7 is a schematic view illustrating the fifth step of FIG. 2.

Referring to FIG. 2 and FIG. 7, a stack structure SS may be prepared. The stack structure SS may include a lower plate PLT1, an upper plate PLT2, and a sheet laminate SSH interposed therebetween. Preparing the stack structure SS may include sandwiching a sheet laminate SSH prepared in the fourth step (S140) between the lower plate PLT1 and the upper plate PLT2 (S150). Although FIG. 7 shows a single sheet laminate SSH being interposed between the lower plate PLT1 and the upper plate PLT2, the present invention is not limited thereto. For example, two or more sheet laminates SSH may be interposed between the lower plate PLT1 and the upper plate PLT2.

Prior to preparing the stack structure SS, boron nitride BN may be evenly applied to the sheet laminate SSH. The lower plate PLT1 and the upper plate PLT2 may include boron nitride.

FIG. 8 is a schematic view illustrating the sixth step of FIG. 2.

Referring to FIG. 2 and FIG. 8, the stack structure SS prepared in the fifth step (S150) may be subjected to a degreasing process (binder burn out (B.B.O.)) (S160). As a result, all organic matter in the sheet laminate SSH, including the binder, the dispersant, and the plasticizer, may be burned out and removed. The degreasing process may be performed in an atmospheric furnace (AF) at about 600°C for about 12 hours. That is, the degreasing process may be performed under atmospheric (air) conditions.

FIG. 9 is a schematic view illustrating the seventh step of FIG. 2.

Referring to FIG. 2 and FIG. 9, after the sixth step (S160), the stack structure SS may be placed in a crucible CRU. A bedding powder BNP may be placed in the crucible CRU such that the stack structure SS is embedded in the bedding powder BNP. The bedding powder BNP may include boron nitride powder, silicon nitride powder, or a mixture thereof. When the bedding powder BNP includes a mixture of boron nitride powder and silicon nitride powder, the boron nitride powder and the silicon nitride powder may be mixed in a ratio of 1:1.

The stack structure SS may be subjected to a sintering process by heating the crucible CRU (S170). As a result, the sheet laminate SSH may be sintered to form a silicon nitride substrate. The sintering process may be performed at a temperature of 1,700°C to 2,000°C. For example, the sintering process may be performed at about 1,900°C for about 6 hours. After completion of sintering of the sheet laminate SSH, a silicon nitride substrate may be obtained as a final product.

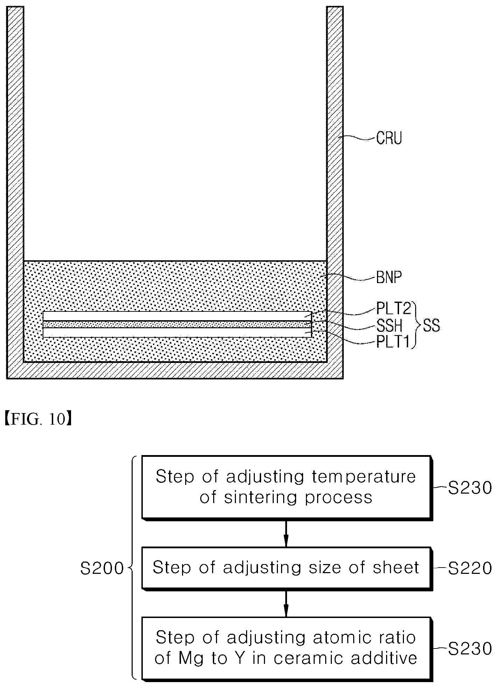

FIG. 10 is a flowchart illustrating a method for adjusting a residual magnesium content in a silicon nitride substrate according to embodiments of the present invention.

Referring to FIG. 1, FIG. 2, and FIG. 10, the step of adjusting a residual magnesium content in the silicon nitride substrate (S200) may include at least one of the following steps: adjusting the temperature of the sintering process (S170) in the manufacturing process of the silicon nitride substrate (S210); adjusting the size of the sheet in the manufacturing process of the silicon nitride substrate (S220), and adjusting the atomic ratio of magnesium to yttrium (Mg/Y) in the ceramic additive in the manufacturing process of the silicon nitride substrate (S230).

The step of adjusting the temperature of the sintering process (S170) in the manufacturing process of the silicon nitride substrate (S210) will be described. The temperature of the sintering process (S170) described with reference to FIG. 9 may be adjusted to 1,700°C to 2,000°C. Here, the volatilization amount (that is, removal amount) of magnesium (Mg) in the sheet laminate SSH may increase with increasing temperature of the sintering process. The residual magnesium (Mg) content in the manufactured silicon nitride substrate may decrease with increasing temperature of the sintering process. In other words, the concentration (that is, residual content) of magnesium (Mg) in the silicon nitride substrate can be adjusted to a desired level by adjusting the temperature of the sintering process.

The step of adjusting the size of the sheet SH or the sheet laminate SSH in the manufacturing process of the silicon nitride substrate (S220) will be described. The size (M×N) of the sheet SH described with reference to FIG. 5 and FIG. 6 may be adjusted through cutting of the sheet SH. Here, the volatilization amount (that is, removal amount) of magnesium (Mg) in the subsequent sintering process may decrease with increasing size of the sheet SH. The residual magnesium (Mg) content in the manufactured silicon nitride substrate may increase with increasing size of the sheet SH. In other words, the concentration (that is, residual content) of magnesium (Mg) in the silicon nitride substrate can be adjusted to a desired level by adjusting the size of the sheet SH.

The step of adjusting the atomic ratio of magnesium to yttrium (Mg/Y) in the ceramic additive in the manufacturing process of the silicon nitride substrate (S230) will be described. The ceramic additive SA described with reference to FIG. 3 and FIG. 4a may include yttrium oxide (Y₂O₃) and magnesium oxide (MgO). As described above, the atomic ratio of magnesium to yttrium (Mg/Y) in the ceramic additive SA may range from 1 to 5, specifically 2 to 5. The atomic ratio of magnesium to yttrium (Mg/Y) in the ceramic additive SA can be adjusted to fall within the range of 1 to 5, specifically 2 to 5, by adjusting the ratio of yttrium oxide powder to magnesium oxide powder in preparation of the ceramic additive SA.

As described above, the amount of the ceramic additive SA used in the slurry preparation step (S120) may be strictly limited to 5 wt% to 7 wt%. Accordingly, it is difficult to increase the residual magnesium (Mg) content in the silicon nitride substrate by increasing the amount of the ceramic additive SA used. However, the residual magnesium (Mg) content in the manufactured silicon nitride substrate can be increased by increasing the atomic ratio of magnesium to yttrium (Mg/Y) in the ceramic additive SA. In other words, the concentration (that is, residual content) of magnesium (Mg) in the silicon nitride substrate can be adjusted to a desired level by adjusting the atomic ratio of magnesium to yttrium (Mg/Y) in the ceramic additive SA.

The sintered sheet laminate SSH, that is, the manufactured silicon nitride substrate, contains 99 wt% or more of SiN and trace amounts of magnesium (Mg) and yttrium (Y) as impurities. The impurities (magnesium (Mg) and yttrium (Y)) may be residues derived from the ceramic additive SA described above.

The residual content (or concentration) of magnesium (Mg) in the silicon nitride substrate may be a critical factor influencing the properties of the silicon nitride substrate SNS. For example, the thermal conductivity and flexural strength (bending strength) of the silicon nitride substrate SNS may be closely correlated with the concentration of magnesium (Mg) in the silicon nitride substrate SNS.

As described above, thermal conductivity of the silicon nitride substrate may be inversely proportional to the residual magnesium (Mg) content in the silicon nitride substrate. Flexural strength of the silicon nitride substrate may be proportional to the residual magnesium (Mg) content in the silicon nitride substrate. The residual content (or concentration) of magnesium in the silicon nitride substrate may be adjusted to 2,000 ppm to 20,000 ppm. Within this range of residual magnesium content, the silicon nitride substrate can have a thermal conductivity of 170 W/m·K to 70 W/m·K. Within this range of residual magnesium content, the silicon nitride substrate can have a flexural strength of 750 MPa to 1,000 MPa.

The silicon nitride substrate may have a size of M×N, wherein each of M and N may range from 40 mm to 200 mm. In one embodiment, the size of the silicon nitride substrate may be reduced to a level smaller than that of the sheet laminate SSH through the sintering process.

### Experimental Example

Silicon nitride substrates were manufactured by the silicon nitride substrate manufacturing method according to the present invention (see FIG. 2 to FIG. 9). Specifically, the sintering process (S170) was performed under varying temperatures of 1,880°C, 1,930°C, and 1,980°C, thereby preparing a first substrate (Experimental Example 1), a second substrate (Experimental Example 2), and a third substrate (Experimental Example 3), respectively. The residual magnesium content in each of the first substrate, the second substrate, and the third substrate was measured. In addition, the thermal conductivity and flexural strength of each of the first substrate, the second substrate, and the third substrate were measured, and results are shown in Table 1.

**Table 1**

| | First substrate (1,880°C, Experimental Example 1) | Second substrate (1,930°C, Experimental Example 2) | Third substrate (1,980°C, Experimental Example 3) |
|---|---|---|---|
| Residual Mg content (ppm) | 10,443 | 9,151 | 7,807 |
| Flexural strength (MPa) | 934.2 | 860.2 | 816.1 |
| Thermal conductivity | 75.4 | 78.2 | 80.9 |
| (W/m·K) | | | |

Referring to Table 1, it can be seen that the residual magnesium content in the substrate decreases with increasing temperature of the sintering process (S170). That is, it was confirmed that the residual magnesium content in a final silicon nitride substrate can be adjusted by adjusting the temperature of the sintering process (S170). It was confirmed that, as the temperature of the sintering process (S170) increases, that is, as the residual magnesium content decreases, thermal conductivity of the silicon nitride substrate increases. These results confirm that the properties (flexural strength and thermal conductivity) of the silicon nitride substrate can be controlled by adjusting the residual magnesium content in the silicon nitride substrate.

Silicon nitride substrates were manufactured by the silicon nitride substrate manufacturing method according to the present invention (see FIG. 2 to FIG. 9). Specifically, the size (M×N) of the sheet was adjusted to 140 mm×190 mm, 100 mm×100 mm, and 40 mm×40 mm, thereby preparing a fourth substrate (Experimental Example 4), a fifth substrate (Experimental Example 5), and a sixth substrate (Experimental Example 6), respectively. Here, the sintering process was performed at 2,050°C. The residual magnesium content in each of the fourth substrate, the fifth substrate, and the sixth substrate was measured. In addition, the thermal conductivity and flexural strength of each of the fourth substrate, the fifth substrate, and the sixth substrate were measured, and results are shown in Table 2.

**Table 2**

| | Fourth substrate (140 mm×190 mm, Experimental Example 1) | Fifth substrate (100 mm×100 mm, Experimental Example 2) | Sixth substrate (40 mm×40 mm, Experimental Example 3) |
|---|---|---|---|
| Residual Mg content (ppm) | 8,367 | 3,632 | 2,263 |
| Flexural strength (MPa) | 834.0 | 772.0 | - |
| Thermal conductivity (W/m·K) | 76.0 | 80.0 | 84.0 |

Referring to Table 2, it can be seen that the residual magnesium content in the substrate decreases with decreasing size of the sheet. That is, it was confirmed that the residual magnesium content in a final silicon nitride substrate can be adjusted by adjusting the cutting size of the sheet in the tape casting process. It was confirmed that, as the size of the sheet decreases, that is, as the residual magnesium content decreases, flexural strength of the silicon nitride substrate decreases. It was confirmed that, as the size of the sheet decreases, that is, as the residual magnesium content decreases, thermal conductivity of the silicon nitride substrate increases. On the other hand, comparison of the fourth substrate, which had a larger size (140 mm×190 mm) with the sixth substrate, which had a smaller size (40 mm×40 mm), shows that the difference in sheet size can result in a great difference in residual magnesium content between silicon nitride substrates manufactured under the same conditions. For example, the residual magnesium content in the fourth substrate was about four times greater than that in the sixth substrate. This indicates that adjusting the size of the sheet has more significant influence on adjustment of the residual magnesium content than adjusting the temperature of the sintering process described above.

Silicon nitride substrates were manufactured by the silicon nitride substrate manufacturing method according to the present invention (see FIG. 2 to FIG. 9). Specifically, a seventh substrate (Experimental Example 7), an eighth substrate (Experimental Example 8), and a ninth substrate (Experimental Example 9) were prepared by varying the amount of the ceramic additive used in the slurry preparation process and the atomic ratio of magnesium to yttrium (Mg/Y) in the ceramic additive. The residual magnesium content in each of the seventh substrate, the eighth substrate, and the ninth substrate was measured.

**Table 3**

| | Amount of ceramic additive used (wt%) | Atomic ratio of magnesium to yttrium (Mg/Y) in ceramic additive | Amount of magnesium (Mg) used (wt%) | Residual Mg content (ppm) |
|---|---|---|---|---|
| Seventh substrate (Experimental Example 7) | 6 | 3.5 | 1.36 | 9,151 |
| Eighth substrate (Experimental Example 8) | 6 | 4.5 | 1.57 | 11,663 |
| Ninth substrate (Experimental Example 9) | 7 | 4.5 | 1.88 | 15,363 |

Referring to Table 3, although the same amount (6 wt%) of the ceramic additive was used in both Experimental Example 7 and Experimental Example 8, the actual amount of Mg used was larger in Experimental Example 8, which had a greater atomic ratio of Mg to Y than Experimental Example 7. As a result, the residual magnesium content in a final silicon nitride substrate was higher in Experimental Example 8 than in Experimental Example 7. In Experimental Example 9, the ceramic additive was used in an amount of 7 wt% and the atomic ratio of Mg to Y was set to a high value of 4.5, which led to the result that the actual amount of Mg used was largest (1.88 wt%) in Experimental Example 9. As a result, the residual magnesium content in a final silicon nitride substrate was highest in Experimental Example 9. These results confirm that the residual magnesium content in a final silicon nitride substrate can be adjusted by adjusting the ratio of Mg to Y in the ceramic additive.

In addition, the thermal conductivity and flexural strength of each of the seventh substrate, the eighth substrate, and the ninth substrate were measured, and results are shown in Table 4.

**Table 4**

| | Substrate 7 (Experimental Example 7) | Substrate 8 (Experimental Example 8) | Substrate 9 (Experimental Example 9) |
|---|---|---|---|
| Residual Mg content (ppm) | 9,151 | 11,663 | 15,363 |
| Flexural strength (MPa) | 860.2 | 936.0 | 991.8 |
| Thermal conductivity (W/m·K) | 78.15 | 72.13 | 67.80 |

It can be seen that, despite identical manufacturing processes, varying the amount of the ceramic additive used and the atomic ratio of Mg to Y resulted in a difference in properties (flexural strength and thermal conductivity) among the seventh, eighth, and ninth substrates. In particular, it can be seen that, as the residual magnesium content increases, flexural strength of the silicon nitride substrate increases while thermal conductivity of the silicon nitride substrate decreases. These results reaffirm that the final residual magnesium content is a key variable in controlling the properties (flexural strength and thermal conductivity) of the silicon nitride substrate.

Although some embodiments have been described herein with reference to the accompanying drawings, it will be apparent to a person having ordinary knowledge in the art that various modifications, changes, alterations, and equivalent embodiments can be made without departing from the spirit and scope of the invention. Therefore, it should be understood that these embodiments are provided for illustration only and are not to be construed in any way as limiting the present invention.

## Claims

1. A method for controlling thermal conductivity of a silicon nitride substrate, comprising the steps of:
manufacturing a silicon nitride substrate; and
adjusting a residual magnesium content in the silicon nitride substrate,
wherein the step of manufacturing a silicon nitride substrate comprises:
preparing a slurry by mixing a silicon nitride powder, a ceramic additive containing magnesium oxide, and a solvent;
forming a sheet by molding the slurry;
forming a stack structure by sandwiching at least one sheet between a lower plate and an upper plate;
subjecting the stack structure to a degreasing process; and
subjecting the stack structure to a sintering process,
wherein thermal conductivity of the silicon nitride substrate is inversely proportional to the residual magnesium content in the silicon nitride substrate.

2. The method according to claim 1, wherein the step of adjusting a residual magnesium content in the silicon nitride substrate comprises adjusting a temperature of the sintering process.

3. The method according to claim 2, wherein
the temperature of the sintering process is adjusted to 1,700°C to 2,000°C, and
the residual magnesium content in the silicon nitride substrate decreases with increasing temperature of the sintering process.

4. The method according to claim 1, wherein the step of adjusting a residual magnesium content in the silicon nitride substrate comprises adjusting a size of the sheet.

5. The method according to claim 4, wherein
the size of the sheet is adjusted to M×N,
each of M and N ranges from 60 mm to 300 mm, and
the residual magnesium content in the silicon nitride substrate increases with increasing size of the sheet.

6. The method according to claim 1, wherein
the ceramic additive comprises yttrium oxide (Y₂O₃) and magnesium oxide (MgO), and
the step of adjusting a residual magnesium content in the silicon nitride substrate comprises adjusting an atomic ratio of magnesium (Mg) to yttrium (Y) in the ceramic additive.

7. The method according to claim 6, wherein
the atomic ratio of magnesium (Mg) to yttrium (Y) in the ceramic additive ranges from 2 to 5, and
the residual magnesium content in the silicon nitride substrate increases with increasing atomic ratio of magnesium (Mg) to yttrium (Y) in the ceramic additive.

8. A method for controlling flexural strength of a silicon nitride substrate, comprising the steps of:
manufacturing a silicon nitride substrate; and
adjusting a residual magnesium content in the silicon nitride substrate,
wherein the step of manufacturing a silicon nitride substrate comprises:
preparing a slurry by mixing a silicon nitride powder, a ceramic additive containing magnesium oxide, and a solvent;
forming a sheet by molding the slurry;
forming a stack structure by sandwiching at least one sheet between a lower plate and an upper plate;
subjecting the stack structure to a degreasing process; and
subjecting the stack structure to a sintering process,
wherein flexural strength of the silicon nitride substrate is proportional to the residual magnesium content in the silicon nitride substrate.

9. The method according to claim 8, wherein the step of adjusting a residual magnesium content in the silicon nitride substrate comprises adjusting a temperature of the sintering process.

10. The method according to claim 9, wherein
the temperature of the sintering process is adjusted to 1,700°C to 2,000°C, and
the residual magnesium content in the silicon nitride substrate decreases with increasing temperature of the sintering process.

11. The method according to claim 8, wherein the step of adjusting a residual magnesium content in the silicon nitride substrate comprises adjusting a size of the sheet.

12. The method according to claim 11, wherein
the size of the sheet is adjusted to M×N,
each of M and N ranges from 60 mm to 300 mm, and
the residual magnesium content in the silicon nitride substrate increases with increasing size of the sheet.

13. The method according to claim 8, wherein
the ceramic additive comprises yttrium oxide (Y₂O₃) and magnesium oxide (MgO), and
the step of adjusting a residual magnesium content in the silicon nitride substrate comprises adjusting an atomic ratio of magnesium (Mg) to yttrium (Y) in the ceramic additive.

14. The method according to claim 13, wherein:
the atomic ratio of magnesium (Mg) to yttrium (Y) in the ceramic additive ranges from 2 to 5, and
the residual magnesium content in the silicon nitride substrate increases with increasing atomic ratio of magnesium (Mg) to yttrium (Y) in the ceramic additive.
